# EUROPÄISCHE PATENTSCHRIFT

(11) **EP 1 767 096 B1**
(45) Veröffentlichungstag und Bekanntmachung des Hinweises auf die Patenterteilung: **12.12.2007**
(21) Anmeldenummer: 05020825.5
(22) Anmeldetag: 23.09.2005
(51) Int. Cl.: A22C 11/10

(54) **Vorrichtung und Verfahren zum Portionieren eines Gutstranges**
Apparatus and method for portioning food
Dispositif ainsi que procédé pour débiter un produit alimentaire

(43) Veröffentlichungstag der Anmeldung: 28.03.2007
(73) Patentinhaber: Albert Handtmann Maschinenfabrik GmbH & Co. KG, 88400 Biberach (DE)
(72) Erfinder: Baechtle, Manfred, 88433 Schemmerhofen (DE); Benz, Michael, 88433 Alberweiler (DE)
(74) Vertreter: Grünecker, Kinkeldey, Stockmair & Schwanhäusser Anwaltssozietät

(56) Entgegenhaltungen:
- EP-A- 1 112 691
- WO-A-03/030646
- US-A- 4 418 447
- US-A- 4 614 005

## Beschreibung

Die Erfindung bezieht sich auf eine Vorrichtung und ein Verfahren zum Portionieren eines Gutstranges der im Oberbegriff der Ansprüche 1 und 9 erläuterten Art.

Eine derartige Vorrichtung und ein derartiges Verfahren sind aus der EP 392 083 bzw. der EP 472 825 bekannt. Die bekannte Vorrichtung enthält ein Portionierelement, das zum Verdrängen von Gut aus dem Gutstrang ausgebildet ist, so dass sich an dieser Stelle eine den Gutstrang in einzelne Abschnitte vorbestimmter Länge teilende Durchmesserverringerung ergibt, in der die Abdrehstelle zum Unterteilen des Gutstranges, beispielsweise in einzelne Würste, ausgebildet wird. Das Portionierelement ist ähnlich einer Fahne ausgebildet, d.h. mit einem freien Ende mit einer Drehachse versehen, während das andere freie Ende ein Formwerkzeug zum Ausbilden der Durchmessereinschnürung aufweist. Das Portionierelement ist neben dem aus einer Füllmaschine ausgestoßenen und sich linear bewegenden Gutstrang angeordnet, wobei sich die Drehachse senkrecht zur Förderrichtung des Gutstranges erstreckt. Das Portionierelement wird in geeigneter, gesteuerter Weise so angetrieben, dass es sich von einer Ausgangsposition an der vorbestimmten Stelle in den Gutstrang bewegt und nach dem Erzeugen der Durchmesserverringerung wieder aus dem Gutstrang zurückzieht. Dabei ist die Drehgeschwindigkeit des Portionierelementes so auf die Fördergeschwindigkeit des Gutstranges abgestimmt, dass die Umlaufgeschwindigkeit des Portionierelementes beim Erzeugen der Durchmesserverringerung mit der Fördergeschwindigkeit des Gutstranges im Wesentlichen übereinstimmt. Hat sich das Portionierelement so weit verdreht, dass es wieder aus dem Gutstrang zurückgezogen ist, so kann vorgesehen werden, dass die Drehgeschwindigkeit des Portionierelementes bis zum Erreichen der Ausgangsposition für eine neue Durchmesserverringerung verlangsamt oder beschleunigt wird, so dass auf diese Weise die Länge der zu unterteilenden Abschnitte verändert werden kann. Allerdings ist hier eine Mindestlänge konstruktiv vorgegeben, die wenigstens dem Abstand zwischen dem Werkzeug und der Achse des Portionierelementes entspricht, da sich das Portionierelement immer radial zur Drehachse ausgerichtet drehen muss. Darüber hinaus ist die Strecke, in der das Portionierelement der Förderbewegung des Gutstranges folgen kann, sehr begrenzt. Für empfindliche Gutstränge, beispielsweise Gutstränge mit koextrudierter Hülle, die erst noch aushärten muss, bevor sie stärker belastet werden kann, ist diese Vorrichtung weniger geeignet.

Aus der WO 03/030646 ist eine weitere Vorrichtung zum Portionieren eines Gutstranges bekannt, mit der der Gutstrang variabel und synchron mit der Extrusionsrate des Gutstranges unterteilbar sein soll. Diese Vorrichtung enthält ein Portionierelement, das auf einer hin- und hergehenden Bewegungsbahn geführt wird. Der Antrieb des Portionierelementes ist in der Art eines Pleuelstangenantriebs ausgebildet, wobei jedoch der Antrieb über die Kurbelwelle erfolgt. Die Kurbelwelle wird über ein relativ kompliziertes Zahnradgetriebe angetrieben und treibt ihrerseits eine zweite Kurbelwelle, die ebenfalls mit dem Portionierelement verbunden ist und dafür sorgt, dass das Portionierelement in seiner Ausrichtung im Wesentlichen senkrecht zum Gutstrang verbleibt. Es wird weiterhin beschrieben, dass der Antrieb des Portionierelementes mit unterschiedlichen Geschwindigkeiten erfolgen kann, so dass die Länge der zu portionierenden Abschnitte verändert werden können. Durch den hohen konstruktiven Auf wand für das Getriebe muss jedoch eine relativ hohe Massenbeschleunigung aufgewandt werden, was eine hohe Antriebsleistung erfordert.

Gemeinsamer Nachteil aller bislang bekannten Portioniervorrichtungen ist jedoch ihre relative Beschränkung auf die vorab festgelegte Arbeitsweise.

Der Erfindung liegt somit die Aufgabe zugrunde, eine Portioniervorrichtung bereitzustellen, die universal und für unterschiedlichste Aufgaben herangezogen werden kann, und die insbesondere in der Lage ist, auch kurze Abschnitte zu portionieren.

Die Aufgabe wird erfindungsgemäß durch die Vorrichtungen nach Anspruch 1 und das Verfahren nach Anspruch 9 gelöst.

Durch die erfindungsgemäße Ausgestaltung kann die Vorrichtung auf einfache Weise an die unterschiedlichsten Arbeitsaufgaben angepasst werden, durch die Möglichkeit, das Portionierwerkzeug um zwei im Abstand zueinander angeordnete und unabhängig voneinander steuerbare Achsen drehen zu können Dadurch ist es möglich, sehr kleine Abschnitte auch bei hohen Transportgeschwindigkeiten zu portionieren.

Vorteilhafte Weiterbildungen der Erfindung sind den Unteransprüchen zu entnehmen.

Von besonderem Vorteil ist es, dass mit der erfindungsgemäßen Vorrichtung die Abschnitte sowohl durch Einschnürung als auch durch Abtrennen als auch durch Einschnüren und Abtrennen portioniert werden können, indem entweder ein Verdrängungselement und/oder ein Trennelement als Portionierwerkzeug eingesetzt werden kann, wobei beide Arten von Werkzeugen in gleicher Weise bewegt und angetrieben werden können.

Sind die Portionierwerkzeuge auswechselbar, so ergibt sich eine noch größere Vielfalt von Arbeitsaufgaben, an die die erfindungsgemäße Vorrichtung angepasst werden kann.

In einer konstruktiv besonders einfachen Ausgestaltung enthält die erfindungsgemäße Vorrichtung einen Drehteller, der um seine Mittellinie drehbar ausgestaltet ist und eine Vielzahl von Positionierwerkzeugen trägt, die in vorbestimmten Winkelabständen auf dem Drehteller angeordnet und um eine eigene Achse drehbar sind.

Ausführungsbeispiele der Erfindung werden nachfolgend anhand der Zeichnungen näher erläutert. Es zeigen:
- Fig. 1: eine schematische Seitenansicht einer mit der erfindungsgemäßen Vorrichtung versehenen Strangformungsmaschine,
- Fig. 2: eine herausvergrößerte, perspektivische Darstellung der erfindungsgemäßen Vorrichtung in einem ersten Ausführungsbeispiel,
- Fig. 3: eine herausvergrößerte, perspektivische Darstellung eines weiteren Ausführungsbeispiels der erfindungsgemäßen Vorrichtung,
- Fig. 4: eine herausvergrößerte, perspektivische Darstellung eines weiteren Ausführungsbeispiels einer erfindungsgemäßen Vorrichtung,
- Fig. 5: eine herausvergrößerte, perspektivische Darstellung eines weiteren Ausführungsbeispiels der erfindungsgemäßen Vorrichtung, und
- Fig. 6: eine herausvergrößerte, perspektivische Darstellung eines weiteren Ausführungsbeispiels der erfindungsgemäßen Vorrichtung, und
- Fig. 7: eine herausvergrößerte, perspektivische Darstellung eines weiteren Ausführungsbeispiels der erfindungsgemäßen Vorrichtung.

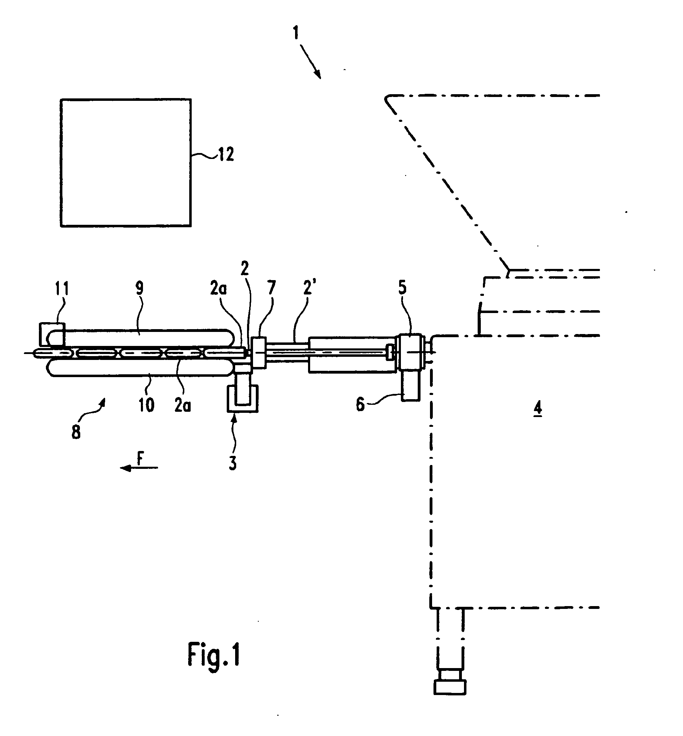

Fig. 1 zeigt in schematischer Darstellung eine Strangformungsmaschine 1 zum Erzeugen eines extrudierten Gutstranges 2, der mit Hilfe wenigstens einer Portioniervorrichtung 3 in einzelne Abschnitte 2a unterteilt wird. Im dargestellten Ausführungsbeispiel ist die Strangformungsmaschine 1 an die Bedürfnisse der Lebensmittelindustrie angepasst und ist insbesondere eine der herkömmlichen Wurstmaschinen, die Wurstbrät strangförmig extrudiert, in einer Hülle verpackt und anschließend mit Hilfe der erfindungsgemäßen Portioniervorrichtung 3 in einzelne Würste unterteilt.

Bis auf die erfindungsgemäß ausgebildete Portioniervorrichtung 3 ist die Strangformungsmaschine 1 herkömmlicher Art, und beispielsweise so ausgebildet, wie sie in der EP 392 083 beschrieben ist.

Die Strangformungsmaschine 1 enthält eine strichpunktierte Füllmaschine 4, die den Gutstrang 2 extrudiert. Zum Ausbilden der einzelnen Abschnitte 2a werden diese in eine Hülle extrudiert und abgedreht. Die Hülle kann jeder Natur- und Kunstdarm sein, kann jedoch auch eine koextrudierte Hülle sein, die zusammen mit dem Gutstrang 2 extrudiert wird und auf dem Gutstrang 2 aushärten muss. Zum Abdrehen der Hülle zwischen den Abschnitten 2a ist ein Abdrehgetriebe 5 vorgesehen, das über einen Elektromotor 6 angetrieben wird. Der Gutstrang 2 wird durch eine mittige Öffnung eines Bremsringes 7 extrudiert, wodurch der Gutstrang 2 in eine Drehung um seine Mittellinie 2' versetzt wird. Wenn der Gutstrang 2 mit einer Hülle versehen ist, so wird diese ebenfalls mitgedreht.

In Förderrichtung F stromabwärts des Bremsringes 7 ist eine Fördereinrichtung 8 vorgesehen, die zwei Endlosförderbänder 9 und 10 aufweist, die an zwei gegenüberliegenden Seiten des Gutstranges 2 angreifen und die Abziehgeschwindigkeit in Förderrichtung F des Gutstranges 2 aus dem Bremsring 7 synchron zum Füllgutausstoß bestimmen. Die Fördergeschwindigkeit beträgt dabei beispielsweise etwa 2m/sec. Die Förderbänder 9, 10 werden synchron durch einen Elektromotor 11 angetrieben. Es ist weiterhin eine Steuerung 12 vorgesehen, durch die die Bestandteile der Vorrichtung 1 gesteuert werden.

Die Vorrichtung 1 arbeitet wie folgt. Der Gutstrang 2 wird durch das Abdrehgetriebe 5 in Drehung versetzt, wobei sich auch die Hülle mitdreht, und wird so weit extrudiert, dass er in den Bereich der Fördereinrichtung 8 gelangt und durch die Endlosförderer 9, 10 ergriffen wird. Dadurch wird der Gutstrang 2 in seiner Drehung stillgesetzt und somit auf Torsion vorgespannt, wobei die Portioniereinrichtung 3 in Tätigkeit tritt, d.h. insbesondere eine Durchmessereinschnürung erzeugt. An dieser Durchmessereinschnürung wird dann die Hülle verdreht, so dass die einzelnen Abschnitte 2a des Gutstranges 2 durch abgedrehte Stellen der Hülle voneinander getrennt werden. An den abgedrehten Stellen können die Abschnitte 2a auch voneinander getrennt werden.

Die bisher beschriebenen Bestandteile der Vorrichtung 1 und ihre Wirkungsweise entsprechen den Bestandteilen und der Wirkungsweise herkömmlicher Wurstmaschinen.

Mit der erfindungsgemäßen Portioniervorrichtung 3 ist es jedoch möglich, neben dem reinen Abdrehen der Abschnitte 2a von einem Gutstrang, der mit Naturdarm oder Kunstdarm umhüllt ist, auch Abschnitte 2a von einem Gutstrang 2 mit koextrudierter Hülle zu portionieren, während sich die Hülle noch in ihrem Aushärtvorgang befindet. Mit der erfindungsgemäßen Portioniereinrichtung 3 ist es weiterhin möglich, einen abgedrehten Gutstrang 2 zwischen den einzelnen Abschnitten 2a zu trennen. Mit der erfindungsgemäßen Portioniervorrichtung 3 ist es schließlich auch möglich, einen Gutstrang 2, mit oder ohne Hülle, ohne Abdrehvorgang in die einzelnen Abschnitte 2a zu trennen.

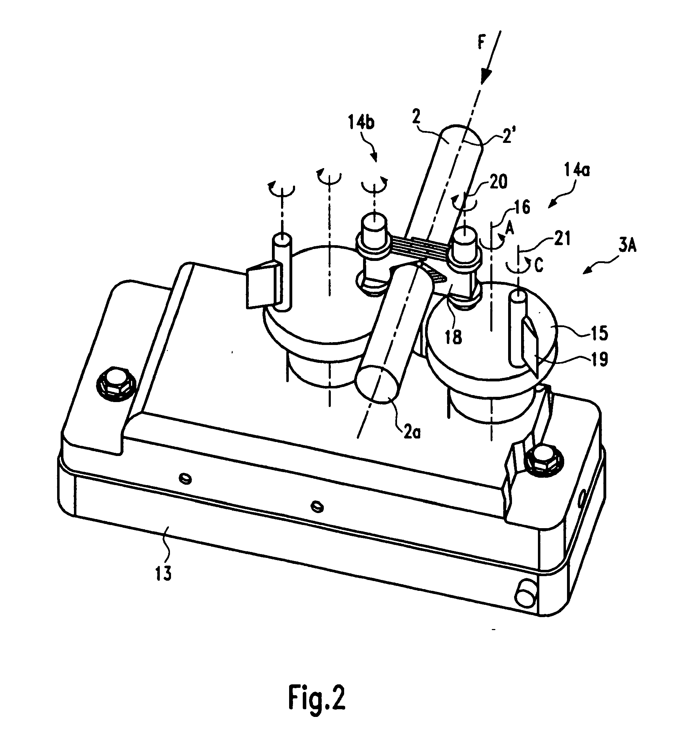

Dies kann durch Portioniervorrichtungen 3 erzielt werden, wie sie in den Fig. 2 bis 7 dargestellt sind.

Fig. 2 zeigt ein erstes Ausführungsbeispiel 3A der erfindungsgemäßen Vorrichtung 3 zum Portionieren eines Gutstranges 2. Die Vorrichtung 3A enthält ein Gehäuse 13, in dem ein Antrieb in Form eines Elektromotors und ein Getriebe verschmutzungssicher untergebracht sind.

Auf der Oberseite des Gehäuses 13 sind zwei Portioniereinheiten 14a, 14b angeordnet, die symmetrisch und beidseitig des Gutstranges 2 angeordnet sind. Beide Einheiten 14a, 14b sind identisch ausgebildet, jedoch spiegelbildlich angeordnet, so dass nachfolgend nur jeweils eine der Einheiten beschrieben werden muss.

Jede der Einheiten 14a, 14b enthält einen Träger 15, der im dargestellten Ausführungsbeispiel als Drehteller ausgebildet ist. Der Träger 15 ist um eine sich quer zur Mittellinie 2' des Gutstranges erstreckende, bevorzugt senkrechte, erste Achse 16 in Richtung des Pfeils A verdrehbar. Die Drehrichtung A ist so gewählt, dass sich der Träger 15 am Gutstrang 2 in Förderrichtung F dreht.

Auf dem Träger 15 ist wenigstens ein Portionierwerkzeug, dargestellt sind zwei Portionierwerkzeuge 18, 19, angeordnet. Die Portionierwerkzeuge 18, 19 sind zusammen mit dem Träger 15 um die Achse 16 in einer Kreisbahn und zusätzlich jeweils um eine zweite eigene Achse 20 bzw. 21 in einer weiteren Kreisbahn drehbar. Die Achsen 20 bzw. 21 sind zur Achse 16 und somit zur Mittellinie des Trägers 15 beabstandet und bevorzugt in der Nähe des Umfangs des Drehtellers angeordnet. Beide Achsen 20, 21 sind bevorzugt parallel zueinander und parallel zur Achse 16. Im dargestellten Ausführungsbeispiel liegen die Achsen 16, 20 und 21 in einer gemeinsamen Ebene senkrecht zum Träger 15, wobei die Achsen 20 und 21 einen Winkelabstand von etwa 180° aufweisen. Die Achsen 16, 20 und 21 sind unabhängig voneinander antreibbar, wobei bevorzugt die Drehzahl pro Zeiteinheit und/oder die Umdrehungsgeschwindigkeit innerhalb einer Umdrehung und/oder die Drehrichtung nach Bedarf verändert werden kann.

Das Portionierwerkzeug 18 ist als Verdrängungselement ausgebildet, d.h. es dient zum Verdrängen des Gutes im Strang 2 an vorbestimmten Stellen, um den Gutstrang 2 in die einzelnen Abschnitte 2a zu portionieren. Das Portionierwerkzeug 18 ist um seine Achse 20 in einer Drehrichtung B bewegbar, die der Förderrichtung F entgegenläuft, wenn sich das Portionierwerkzeug 18 an seiner Position nahe des Gutstranges 2 befindet.

Jedes der als Verdrängungselemente ausgebildeten Portionierwerkzeuge 18 der beiden Einheiten 14a, 14b ist in der Art einer zweizinkigen Gabel mit einer V-förmigen Aufnahmeöffnung für den Gutstrang ausgebildet, wobei sich die Aufnahmeöffnungen beider Verdrängerelemente 18 zum Ausbilden eines durchmesserverringerten Bereiches im Gutstrang 2, d.h. zum Unterteilen des Gutstranges 2 in die einzelnen Abschnitte 2a aneinander annähern. Dies wird durch eine vorbestimmte Steuerung jeder Einheit 14a, 14b erreicht. Die Drehgeschwindigkeit des Trägers 15 und somit des Verdrängerelementes 18 um die Achse 16 in Drehrichtung A wird beim Eingriff des Verdrängerelementes 18 in den Gutstrang 2 an die Fördergeschwindigkeit angepasst (bevorzugt gleiche Drehzahl bzw. Umfangsgeschwindigkeit), und außerhalb des Eingriffs auf die vorbestimmte Länge der einzelnen Abschnitte 2a abgestimmt. Die Drehung der Verdrängerelemente 18 um die Achse 20 wird so gesteuert, dass das Verdrängerelement 18 beim Erstkontakt mit dem Gutstrang 2 im Wesentlichen rechtwinklig zur Mittellinie 2' ausgerichtet ist und diese Ausrichtung durch Drehung in Richtung B, entgegen A, im Wesentlichen beibehält, bis die Durchmesserverringerung fertiggestellt ist und der Träger 15 im Verlaufe seiner Drehung A das Verdrängerelement 18 wieder aus dem Kontakt mit dem Gutstrang 2 zurückgezogen hat. Dabei ist im Scheitelpunkt die Geschwindigkeit des Portionierelementes in Förderrichtung F zumindest annähernd gleich der Umfangsgeschwindigkeit der Achse 20 um die Achse 16. Durch die Möglichkeit, das Portionierwerkzeug 18 zusätzlich zu einer Drehung in Drehrichtung A auch in Drehrichtung B zu drehen, wird weiterhin sichergestellt, dass das Portionierwerkzeug 18 der Bewegung des Gutstranges 2 in Förderrichtung F über einen wesentlich größeren Bereich folgen kann, als dies bei einer Drehbewegung allein in Drehrichtung A um die Achse 16 möglich wäre. Der Gutstrang 2 wird somit wesentlich sanfter gehandhabt, als dies mit herkömmlichen Portionierwerkzeugen möglich ist.

Das zweite Portionierwerkzeug 19 ist als Trennelement ausgebildet, mit dem die Abschnitte 2a voneinander getrennt werden können. Das zweite Portionierelement 19 ist in Drehrichtung C um die Drehachse 21 drehbar angetrieben, wobei die Drehrichtung C bevorzugt so gewählt ist, dass die Bewegung in Förderrichtung erfolgt, wenn sich das Portionierelement 19 an seiner größten Annäherung an den Gutstrang 2 befindet. Auf diese Weise ist es möglich, eine Trennung sehr schnell und sauber vorzunehmen, wobei die Portionierelemente 19 mit dem Gutstrang 2 beim Trennen mitlaufen, so dass sich eine einzige, definierte Schnittstelle durch ein Zusammenwirken der Trennelemente beider Einheiten 14a, 14b ergibt. Die Drehrichtung der Achse 21 kann auch in Gegenrichtung zu C erfolgen, um einen langen mitlaufenden Schnitt zu erreichen.

Die erfindungsgemäße Portioniereinrichtung 3 ist auf einfache Weise an unterschiedliche Längen der Abschnitte 2a anpassbar. Dies geschieht bevorzugt durch eine Steuerung der Geschwindigkeiten in den Drehrichtungen A, B und C sowie gegebenenfalls durch eine Umsteuerung der Drehrichtung. So können beispielsweise extrem kurze Abschnitte 2a portioniert werden, indem die Geschwindigkeit in Drehrichtung A sofort erhöht wird, sobald sich eines der Portionierwerkzeuge 18, 19, insbesondere das Verdrängerelement 18, aus dem Gutstrang 2 zurückgezogen hat, so dass die restliche Strecke einer vollen Umdrehung um die Achse 16 bis zum Wiedereintauchen in den Gutstrang 2 wesentlich schneller zurückgelegt wird, als dies der Fördergeschwindigkeit F entspricht. Nach dem Eintauchen in den Gutstrang 2 kann dann die Geschwindigkeit wieder auf eine an die Fördergeschwindigkeit F angepasste Drehgeschwindigkeit verringert werden. Der Vorgang kann umgekehrt werden, d.h. die Drehgeschwindigkeit in Drehrichtung A kann verringert werden, wenn besonders lange Abschnitte 2a gewünscht sind. Um die Portionierwerkzeuge 18, 19 wieder in ihre Ausgangsposition zum Eintauchen in den Gutstrang 2 zu bringen, können die Portionierwerkzeuge 18, 19 entweder in Umkehrung ihrer Drehrichtung um die Achsen 20, 21 um denjenigen Betrag zurückgedreht werden, um den sie während ihrer Arbeitsphase gedreht wurden, oder sie können ihre Drehrichtungen B, C beibehalten und eine vollständige Umdrehung vollenden, bevor sie wiederum in den Gutstrang 2 eintauchen.

Eine weitere Variationsmöglichkeit ergibt sich, wenn die Portionierwerkzeuge 18, 19 auswechselbar auf dem Träger 15 befestigt sind. Dann kann beispielsweise das Trennelement durch ein weiteres Verdrängerelement oder das Verdrängerelement durch ein weiteres Trennelement ersetzt werden. Sind zwei oder noch mehr gleiche Portionierwerkzeuge auf einem Träger befestigt, so können, je nach Drehgeschwindigkeit des Trägers und/oder Fördergeschwindigkeit des Gutstranges, beliebig kleine Abschnitte abgeteilt werden oder der Vorgang des Portionierens, beispielsweise bei relativ unempfindlichen Gutsträngen, wesentlich beschleunigt werden.

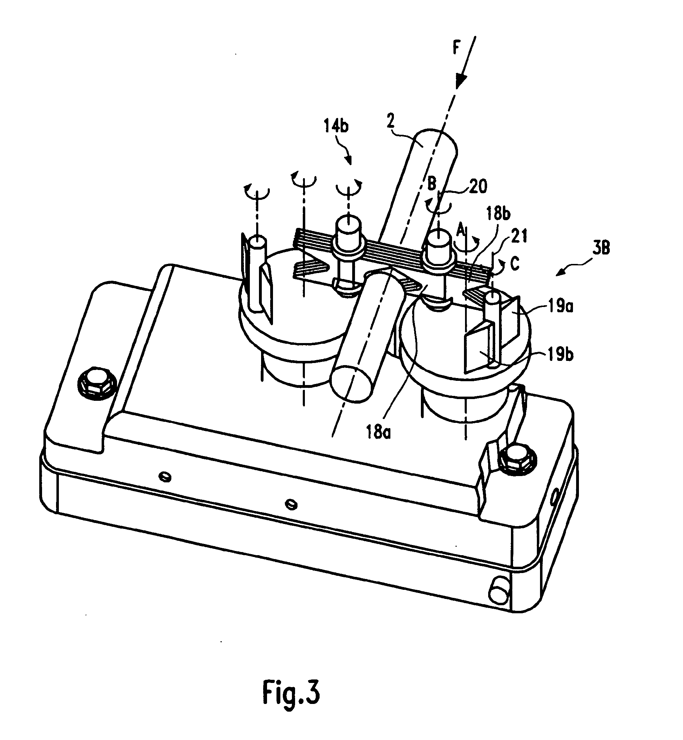

Es ist jedoch auch möglich, wie das Ausführungsbeispiel 3B aus Fig. 3 zeigt, eine Mehrzahl von Portionierwerkzeugen um die gleiche Achse 20 bzw. 21 drehbar anzuordnen. Im dargestellten Ausführungsbeispiel drehen sich um die Achse 20 in jeder Einheit 14a, 14b jeweils zwei als Verdrängerelemente ausgebildete Portionierwerkzeuge 18a, 18b und um die Achse 21 zwei als Trennelemente ausgebildete Portionierwerkzeuge 19a und 19b. Im dargestellten Ausführungsbeispiel sind die beiden Portionierelemente 18a, 18b für unterschiedliche Durchmesser von Gutsträngen 2 mit unterschiedlichen Öffnungsweiten ausgebildet, während die als Trennelemente ausgebildeten Portionierwerkzeuge 19a, 19b zum Trennen unterschiedlich starker Gutstränge 2 unterschiedlich weit von der Achse 21 vorstehen. Die verschiedenen Werkzeuge 18a, 18b und 19a, 19b liegen sich bezüglich ihrer Drehachse 20, 21 diametral gegenüber. Die übrige Ausgestaltung der Portioniereinrichtung entspricht dem Ausführungsbeispiel gemäß Fig. 2, so dass auf die dortigen Erläuterungen verwiesen werden kann.

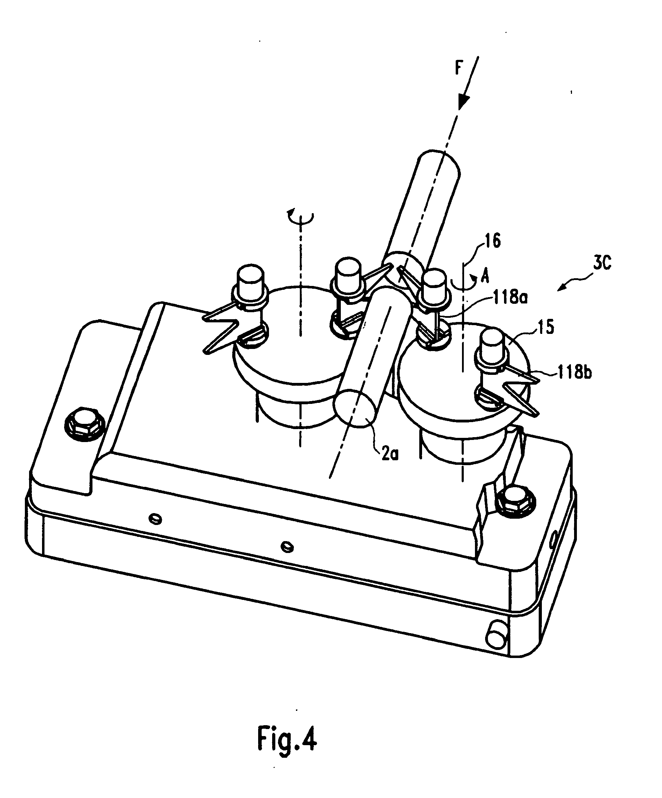

Fig. 4 zeigt ein weiteres Ausführungsbeispiel einer erfindungsgemäßen Portioniervorrichtung 3C, das besonders für die Erzeugung relativ kurzer Abschnitte 2a ausgebildet ist. Das Ausführungsbeispiel 3c enthält den Träger 15, der um seine als Achse 16 ausgebildeten Mittellinie in Drehrichtung A drehbar angetrieben ist. Auf dem Träger 15 sind zwei Portionierwerkzeuge 118a, 118b angeordnet, deren Drehmöglichkeit um ihre eigenen Achsen blockiert ist, wobei sie sich im Wesentlichen radial zur Achse 16 erstrecken. Die beiden als Verdrängerelemente ausgebildeten Portionierwerkzeuge 118a, 118b liegen sich bezüglich der Achse 16 diametral gegenüber. Mit dieser Vorrichtung 3C kann bei jeder halben Umdrehung um die Drehachse A eine Durchmesserverringerung erreicht werden, wobei durch eine entsprechende Geschwindigkeitssteuerung in Drehrichtung A auch hier unterschiedliche Längen der Abschnitte 2a eingestellt werden können. Die übrigen Bestandteile dieses Ausführungsbeispieles entsprechend dem Ausführungsbeispiel gemäß Fig. 2 und sind nicht nochmals erläutert.

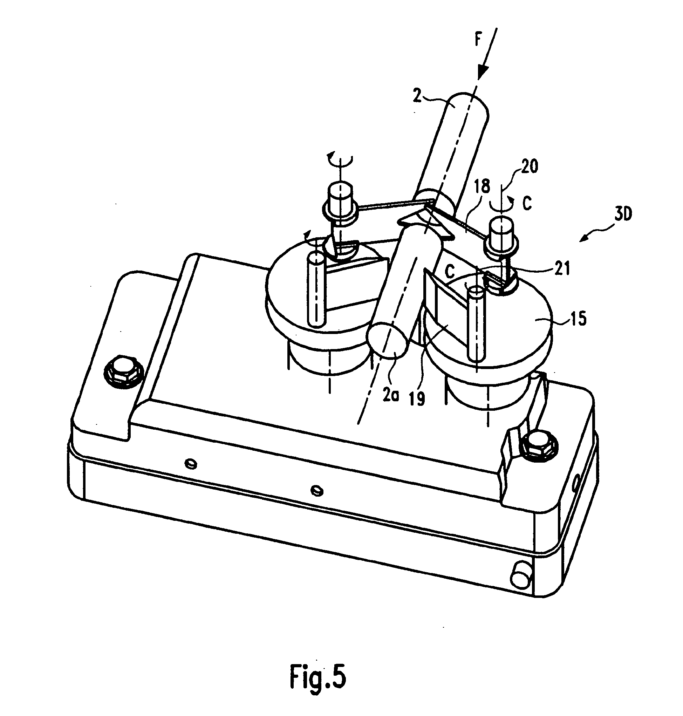

In Fig. 5 ist ein weiteres Ausführungsbeispiel 3D dargestellt, das bis auf die nachfolgend beschriebenen Einzelheiten dem Ausführungsbeispiel nach Fig. 1 entspricht. Beim Ausführungsbeispiel 3D ist die Drehbewegung des Trägers 15 blockiert. Auf dem Träger 15 sind wiederum zwei Portionierwerkzeuge 18 bzw. 19 angeordnet und um ihre jeweilige Achse 20 bzw. 21 in Drehrichtung C verdrehbar, d.h. sowohl das als Verdrängerelement ausgebildete Portionierwerkzeug 18 als auch das als Trennelement ausgebildete Portionierwerkzeug 19 sind beim Eintauchen in den Gutstrang 2 in Förderrichtung F bewegbar und werden somit in Förderrichtung F nachgeführt.

Die beiden Portionierwerkzeuge 18, 19 liegen in Förderrichtung F hintereinander und liegen sich bezüglich des Drehtellers 15 diametral gegenüber, wobei das als Verdrängerelement ausgebildete Portionierwerkzeug 18 stromaufwärts des Trennelementes 19 angeordnet ist. Die Steuerung der beiden Portionierwerkzeuge 18, 19 erfolgt derart, dass zunächst durch eine Drehbewegung in Drehrichtung C die Verdrängerelemente 18 in den Gutstrang 2 hineinbewegt werden und dort eine Durchmesserverringerung erzeugen, während das Trennelement 19 aus dem Gutstrang 2 zurückgezogen ist. Sobald die Durchmesserverringerung fertiggestellt wurde und sich die Verdrängerelemente 18 aus dem Gutstrang 2 zurückgezogen haben, tauchen die Trennelemente 19 beider Einheiten an der Durchmesserverringerung ein und trennen einen Abschnitt 2a vom Gutstrang 2. Zur Veränderung der Länge der Abschnitte 2a können die Drehbewegungen um die Achsen 20, 21 so gesteuert werden, dass eine Rückkehr in die Ausgangsposition mit einer höheren Geschwindigkeit erfolgt als während der Arbeitsphase der Werkzeuge.

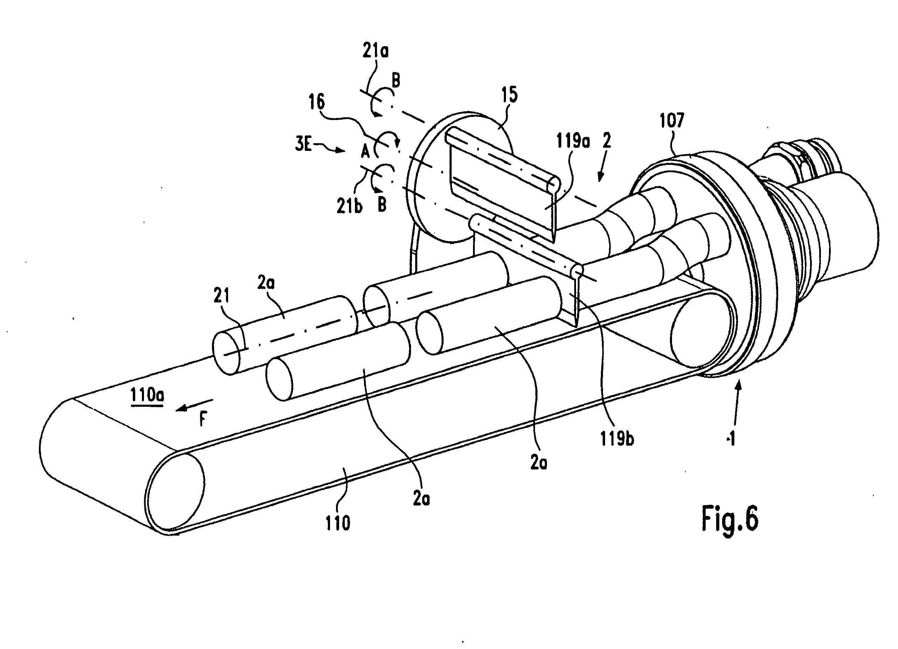

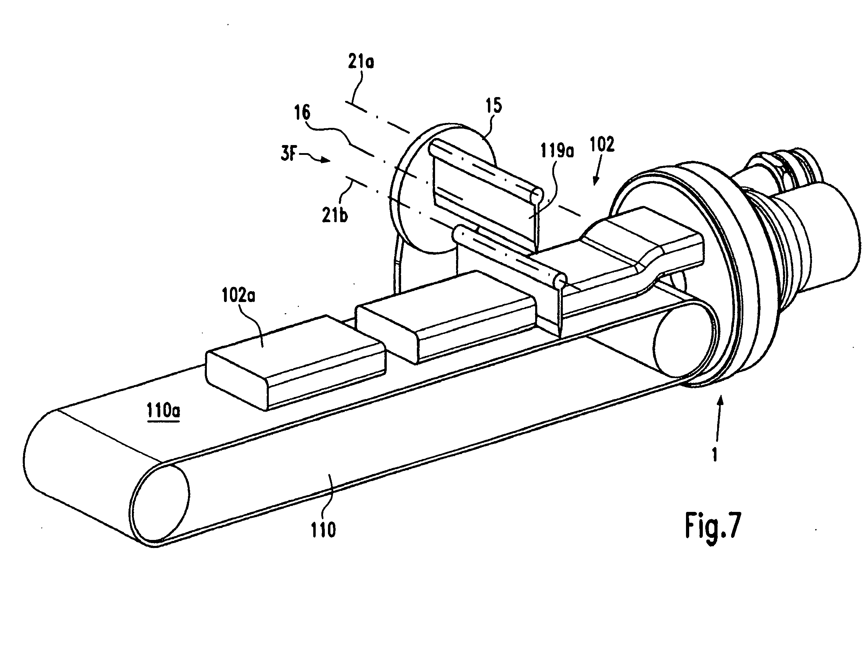

Die Fig. 6 und 7 zeigen zwei weitere Ausführungsbeispiele einer erfindungsgemäßen Portioniereinrichtung 3E und 3F, die lediglich zum Unterteilen eines Gutstranges 2 und nicht zu dessen Einschnürung oder Abdrehung ausgebildet sind. Die Portioniereinrichtungen 3E und 3F können beispielsweise zum Unterteilen eines extrudierten Gutstranges aus Hackfleisch oder einer anderen Lebensmittelmasse verwendet werden, die zum Zeitpunkt der Trennung bzw. Unterteilung verpackt oder unverpackt sein kann.

Im Ausführungsbeispiel nach Fig. 6 wird die Portioniereinrichtung 3E zum gleichzeitigen Unterteilen einer Mehrzahl paralleler Gutstränge 2 in im Wesentlichen gleich große Abschnitte 2a eingesetzt. Die Gutstränge 2 werden durch eine Strangformmaschine 1 ausgestoßen, die der Strangformmaschine 1 gemäß Fig. 1 gleicht, jedoch nicht unbedingt mit einer Vorrichtung zum Aufbringen bzw. Koextrudieren einer Hülle versehen sein muss.

Die Gutstränge 2 werden in kreiszylindrischer oder Wurstform von einem Extruderkopf 107 ausgegeben und auf ein Förderband 110 abgelegt, das die extrudierten Gutstränge 2 horizontal nebeneinander liegend in Förderrichtung F vom Extruderkopf 107 abzieht. Die Fördereinrichtung 110 ist bevorzugt ein Bandförderer oder dgl., der eine definierte Auflagefläche 110a für die Gutstränge 2 bildet.

Die Portioniervorrichtung 3E enthält einen Träger 15, der im dargestellten Ausführungsbeispiel um eine Achse 16 drehbar angetrieben wird, die im Wesentlichen waagerecht und wiederum quer zu den Längsmittellinien der Gutstränge 2 bzw. zur Förderrichtung F verläuft. Der Träger 15 ist wiederum vorzugsweise als kreisförmige Scheibe ausgebildet. Auf dem Träger 15 sind zwei Portionierwerkzeuge 119a und 19b angeordnet, die jeweils um eine Achse 21 a bzw. 21 b verdrehbar sind. Die Achsen 21 a, 21 b sind von der Achse 16 beabstandet, verlaufen parallel zur Achse 16 und sind auf diametral gegenüberliegenden Seiten bezüglich der Achse 16 angeordnet.

Die Portionierwerkzeuge 119a, 119b sind beide als Trennwerkzeuge ausgebildet und so konstruiert, dass sie beide Gutstränge 2 gleichzeitig durchschneiden, wobei die Auflagefläche 110a des Förderers 110 als Gegenfläche dienen kann.

Zum Schneiden der Gutstränge wird der Träger 15 in Drehrichtung A, d.h. so angetrieben, dass er in seiner größten Nähe zu den Gutsträngen 2 parallel und in gleicher Richtung zur Förderrichtung F läuft. Bevorzugt ist die Drehgeschwindigkeit des Trägers 15 so ausgebildet, dass ein sich gerade in Eingriff mit dem Gutstrang 2 befindendes Portionierwerkzeug mit einer an die Fördergeschwindigkeit angepassten Geschwindigkeit und bevorzugt mit der gleichen Geschwindigkeit wie der Gutstrang 2 läuft.

Während des Eingriffs des Portionierwerkzeuges 119a, 119b, wird dieses um die Achse 21a bzw. 21b in Drehrichtung B verdreht, die der Drehrichtung A entgegengesetzt ist. Die Drehgeschwindigkeit in Richtung B wird so bemessen, dass das Portionierwerkzeug 119a bzw. 119b über den gesamten Zeitraum eines Eingriffs mit den Gutsträngen 2, d.h. vom Beginn bis zum Ende des Schnittes zum Erzeugen der Abschnitte 2a den gleichen Winkel zur Längsmittellinie 2a der Gutstränge 2 behält. Im dargestellten Ausführungsbeispiel sind die Portionierwerkzeuge 119a, 119b Messer mit einer im Wesentlichen plattenförmigen Klinge, wobei die Drehgeschwindigkeit in Drehrichtung B so bemessen wird, dass sich die Klinge bzw. deren Schneide zum Beginn des Schnittes im Wesentlichen senkrecht zur Unterstützungsfläche 110A ausrichtet und diese Ausrichtung während der Drehung des Trägers 15 beibehält, bis das entsprechende Messer den Schnitt beendet hat und wieder aus dem Gutstrang 2 herausgezogen wird. Auf diese Weise wird eine sehr glatte, rechtwinklige Schnittfläche erreicht.

Wie auch in den oben beschriebenen Ausführungsbeispielen ist es auch bei der Portioniervorrichtung 3E möglich, die Länge der Abschnitte 2a auf einfache Weise einzustellen, indem die Drehgeschwindigkeit des Trägers 15, insbesondere zwischen zwei Schnitten, verlängert oder verkürzt wird. Eine weitere Möglichkeit zum Verändern der Länge der Abschnitte 2a besteht, wie auch bei den oben beschriebenen Ausführungsbeispielen, in der Möglichkeit, die Zahl der auf dem Träger 15 vorgesehenen und um jeweils eine eigene Achse drehbaren Portionierwerkzeugen zu verringern oder zu erhöhen.

Die Portioniervorrichtung 3F gemäß Fig. 7 unterscheidet sich von der Portioniervorrichtung 3E gemäß Fig. 6 lediglich durch die Form des extrudierten Gutstranges 102. Dieses Ausführungsbeispiel zeigt, dass anstelle von einem oder mehreren Gutsträngen mit einem runden Querschnitt auch ein oder mehrere Gutstränge mit rechteckigem oder quadratischem Querschnitt durch die erfindungsgemäße Portioniervorrichtung in Abschnitte 102a teilbar sind, ohne dass es konstruktive Änderungen an der Vorrichtung, außer am Extrusionskopf 107, bedarf.

In Abwandlung der beschriebenen und gezeichneten Ausführungsbeispiele können die einzelnen Merkmale neu kombiniert und/oder die anhand der einzelnen Ausführungsbeispiele beschriebene Ausgestaltungen untereinander ausgetauscht werden. So könnte beispielsweise auch bei den Ausführungsbeispielen nach den Fig. 2 und 3 eines der Werkzeuge in seiner Drehung blockiert sein. In allen Ausführungsbeispielen können die Werkzeuge auswechselbar auf dem Träger angeordnet sein. Statt des Drehtellers können Dreharme vorgesehen werden. Es können weiterhin mehr als zwei Werkzeuge pro Einheit vorgesehen sein. Es ist weiterhin möglich, abweichend von den Darstellungen der Fig. 2 und 3, auf einem Träger jeweils die gleiche Art Portionierwerkzeuge anzuordnen, also z. B. nur Verdrängerelemente oder nur Trennelemente vorzusehen, und jeweils wenigstens eine Verdräng- und eine Trenn-Portioniereinrichtung in Förderrichtung hintereinander anzuordnen, wenn sowohl die Einschnürung als auch eine Trennung gewünscht wird. damit wären z.B. unterschiedliche Taktlängen zum Portionieren und Trennen besser zu verwirklichen, wenn z.B. nur hinter jedem zweiten oder hinter einer vorbestimmten Anzahl von Abschnitten getrennt werden soll (für Wurstketten oder dgl.).

## Patentansprüche

1. Vorrichtung (3) zum Portionieren eines sich in einer Förderrichtung (F) bewegenden Gutstrangs (2, 102), insbesondere eines Wurststrangs, in einzelne Abschnitte (2a) vorbestimmter Länge, mit wenigstens einem Portionierwerkzeug (18, 18a, 18b, 19, 19a, 19b, 119a, 119b), das in einer Kreisbahn um eine Achse derart drehbar ist, dass es quer zur Förderrichtung (F) in den Gutstrang (2, 102) hinein und aus ihm heraus bewegbar ist und der Bewegung in Förderrichtung (F) begrenzt folgt, **dadurch gekennzeichnet, dass** das Portionierwerkzeug (18, 18a, 18b, 19, 19a, 19b, 119a, 119b) auf einer ersten Kreisbahn um eine erste Achse (16) und auf einer zweiten Kreisbahn um eine zweite Achse (20, 21) drehbar ist, wobei die erste und die zweite Achse im Abstand zueinander angeordnet und die Drehbewegungen (A, B, C) um die erste und um die zweite Achse (16, 20, 21) unabhängig voneinander steuerbar sind.

2. Vorrichtung nach Anspruch 1, **dadurch gekennzeichnet, dass** eine Mehrzahl Portionierwerkzeuge (18, 19, 19a, 19b, 119a, 119b) vorgesehen sind, die jeweils um eine eigene zweite Achse (20, 21) und in vorbestimmten Winkelabständen zueinander gemeinsam um eine erste Achse (16) drehbar sind.

3. Vorrichtung nach Anspruch 1 oder 2, **dadurch gekennzeichnet, dass** das Portionierwerkzeug (18, 19, 19a, 19b, 119a, 119b) mit seiner Achse (20, 21) auf einem Träger (15) drehbar angeordnet ist und der Träger (15) um die erste Achse (16) drehbar ist.

4. Vorrichtung nach Anspruch 3, **dadurch gekennzeichnet, dass** auf dem Träger (15) eine Mehrzahl Portionierwerkzeuge (18, 18a, 18b, 19, 19a, 19b, 119a, 119b) vorgesehen sind.

5. Vorrichtung nach einem der Ansprüche 1 bis 4, **dadurch gekennzeichnet, dass** das Portionierwerkzeug (18, 18a, 18b, 19, 19a, 19b, 119a, 119b) auswechselbar ist.

6. Vorrichtung nach einem der Ansprüche 1 bis 5, **dadurch gekennzeichnet, dass** eine Mehrzahl von Portionierwerkzeugen (18a, 18b; 19a, 19b) um eine gemeinsame zweite Achse (20, 21) drehbar sind.

7. Vorrichtung nach einem der Ansprüche 1 bis 6, **dadurch gekennzeichnet, dass** das Portionierwerkzeug (18, 18a, 18b) ein Verdrängungselement zum Erzeugen einer Einschnürung im Gutstrang (2) ist.

8. Vorrichtung nach einem der Ansprüche 1 bis 7, **dadurch gekennzeichnet, dass** das Portionierwerkzeug (19, 19a, 19b, 119a, 119b) ein Trennelement zum Abschneiden der Abschnitte (2a, 102a) ist.

9. Verfahren zum Portionieren eines sich in einer Förderrichtung (F) bewegenden Gutstrangs (2, 102), insbesondere eines Wurststrangs, in einzelne Abschnitte (2a, 102a) vorbestimmter Länge, wobei wenigstens ein Portionierwerkzeug (18, 18a, 18b, 19, 19a, 19b, 119a, 119b) in einer Kreisbahn um eine Achse derart drehbar angetrieben wird, dass es quer zur Förderrichtung (F) in den Gutstrang (2, 102) hinein und aus ihm heraus bewegt wird und der Bewegung in Förderrichtung (F) begrenzt folgt, **dadurch gekennzeichnet, dass** das Portionierwerkzeug (18, 18a, 18b, 19, 19a, 19b, 119a, 119b) in einer Kreisbahn um eine erste Achse (16) und in einer weiteren Kreisbahn um eine zweite Achse (20, 21) gedreht wird, wobei die erste und die zweite Achse (16, 20, 21) im Abstand zueinander angeordnet sind und die Drehbewegungen (A, B, C) um die erste und um die zweite Achse (16, 20, 21) unabhängig voneinander steuerbar sind.

10. Verfahren nach Anspruch 9, **dadurch gekennzeichnet, dass** eine Mehrzahl Portionierwerkzeuge (18, 18a, 18b, 19, 19a, 19b, 119a, 119b) vorgesehen sind, die jeweils um eine eigene Achse (20, 21) und in vorbestimmten Winkelabständen zueinander gemeinsam um eine gemeinsame Achse (16) drehbar sind, wobei die Drehbewegungen eines Portionierwerkzeuges um seine Achse (20) unabhängig von der Drehbewegung eines anderen Portionierwerkzeuges um dessen Achse (21) steuerbar ist.

## Claims

1. A device (3) for portioning a string of material (2, 102) moving in a conveying direction (F), particularly a string of sausage, into individual sections (2a) of a predetermined length, comprising at least one portioning tool (18, 18a, 18b, 19, 19a, 19b, 119a, 119b), which is rotatable in a circular path around an axis in a manner that it can be moved transversely with respect to the conveying direction (F) into the string of material (2, 102) and out of the string of material and that it follows the movement in the conveying direction (F) in a limited manner, **characterized in that** the portioning tool (18, 18a, 18b, 19a, 19b, 119a, 119b) is rotatable on a first circular path around a first axis (16) and on a second circular path around a second axis (20, 21), wherein the first and the second axis are arranged at a distance to one another and the rotary movements (A, B, C) around the first and the second axis (16, 20, 21) can be controlled independent of one another.

2. A device as claimed in claim 1, **characterized in that** a plurality of portioning tools (18, 19, 19a, 19b, 119a, 119b) are provided, which are each rotatable around their own axis (20, 21) and in predetermined angular distance with respect to one another around a common first axis (16).

3. A device as claimed in claim 1 or 2, **characterized in that** the portioning tool (18, 19, 19a, 19b, 119a, 119b) with its axis (20, 21) is rotatably arranged on a carrier (15), and the carrier (15) is rotatable around the first axis (16).

4. A device as claimed in claim 3, **characterized in that** a plurality of portioning tools (18, 18a, 18b, 19, 19a, 19b, 119a, 119b) are provided on the carrier (15).

5. A device as claimed in one of claims 1 to 4, **characterized in that** the portioning tool (18, 18a, 18b, 19, 19a, 19b, 119a, 119b) is exchangeable.

6. A device as claimed in one of claims 1 to 5, **characterized in that** a plurality of portioning tools (18a, 18b; 19a, 19b) are rotatable around a common second axis (20, 21).

7. A device as claimed in one of claims 1 to 6, **characterized in that** the portioning tool (18, 18a, 18b) is a displacement element for generating a constriction in the string of material (2).

8. A device as claimed in one of claims 1 to 7, **characterized in that** the portioning tool (19, 19a, 19b, 119a, 119b) is a separation element for cutting off the sections (2a, 102a).

9. A method of portioning a string of material (2, 102), particularly a string of sausage, moving in a conveying direction (F) into individual sections (2, 102a) of a predetermined length, wherein at least one portioning tool (18, 18a, 18b, 19, 19a, 19b, 119a, 119b) is rotatably driven in a circular path around an axis in a manner that it is moved transversely to the conveying direction (F) into the string of material (2, 102) and out of the string of material and follows the movement of the conveying direction in a limited manner, **characterized in that** the portioning tool (18, 18a, 18b, 19, 19a, 19b, 119a, 119b) is rotated in a circular path around a first axis (16) and in a further circular path around a second axis (20, 21), wherein the first and the second axis (16, 20, 21) are arranged at a distance to each other and the rotary movements (A, B, C) around the first and around the second axis (16, 20, 21) can be controlled independent of one another.

10. A method as claimed in claim 10, **characterized in that** a plurality of portioning tools (18, 18a, 18b, 19, 129a, 19b, 119a, 119b) are provided, which are rotatable around their own axis (20, 21) and in predetermined angular distances with respect to each other around a common axis (16), wherein the rotary movements of a portioning tool around its axis (20) is controllable independent of the rotary movement of another portioning tool around its axis (21).

## Revendications

1. Dispositif (3) pour la mise en portions d'un cordon de produit (2, 102), en particulier d'un cordon de saucisses, se déplaçant dans une direction de transport (F), en sections individuelles (2a) de longueur prédéfinie, avec au moins un outil de mise en portions (18, 18a, 18b, 19, 19a, 19b, 119a, 119b), qui peut tourner dans une trajectoire circulaire autour d'un axe, de telle sorte que, transversalement à la direction de transport (F), il pénètre dans le cordon de produit (2, 102) et peut être déplacé hors de celui-ci et suit de façon limitée le déplacement dans la direction de transport (F), **caractérisé en ce que** l'outil de mise en portions (18, 18a, 18b, 19, 19a, 19b, 119a, 119b) peut tourner sur une première trajectoire circulaire autour d'un premier axe (16) et sur une seconde trajectoire circulaire autour d'un second axe (20, 21), le premier et le second axe étant disposés à distance l'un de l'autre et les mouvements de rotation (A, B, C) autour du premier et du second axe (16, 20, 21) pouvant être commandés indépendamment les uns des autres.

2. Dispositif suivant la revendication 1, **caractérisé en ce qu'**il est prévu une pluralité d'outils de mise en portions (18, 19, 19a, 19b, 119a, 119b), qui peuvent tourner chacun autour d'un second axe propre (20, 21) et conjointement autour d'un premier axe (16) à des distances angulaires mutuelles prédéfinies.

3. Dispositif suivant l'une des revendications 1 et 2, **caractérisé en ce que** l'outil de mise en portions (18, 19, 19a, 19b, 119a, 119b) est disposé tournant par son axe (20, 21) sur un support (15), et le support (15) pouvant tourner autour du premier axe (16).

4. Dispositif suivant la revendication 3, **caractérisé en ce qu'**une pluralité d'outils de mise en portions (18, 18a, 18b, 19, 19a, 19b, 119a, 119b) est prévue sur le support (15).

5. Dispositif suivant l'une des revendications 1 à 4, **caractérisé en ce que** l'outil de mise en portions (18, 18a, 18b, 19, 19a, 19b, 119a, 119b) est échangeable.

6. Dispositif suivant l'une des revendications 1 à 5, **caractérisé en ce qu'**une pluralité d'outils de mise en portions (18a, 18b ; 19a, 19b) peut tourner autour d'un second axe commun (20, 21).

7. Dispositif suivant l'une des revendications 1 à 6, **caractérisé en ce que** l'outil de mise en portions (18, 18a, 18b) est un élément de refoulement pour produire un rétrécissement dans le cordon de produit (2).

8. Dispositif suivant l'une des revendications 1 à 7, **caractérisé en ce que** l'outil de mise en portions (19, 19a, 19b, 119a, 119b) est un élément de séparation pour découper les sections (2a, 102a).

9. Procédé pour la mise en portions d'un cordon de produit (2, 102), en particulier d'un cordon de saucisses, se déplaçant dans une direction de transport (F), en sections individuelles (2a, 102a) de longueur prédéfinie, au moins un outil de mise en portions (18, 18a, 18b, 19, 19a, 19b, 119a, 119b) étant entraîné en rotation dans une trajectoire circulaire autour d'un axe, de telle sorte que, transversalement à la direction de transport (F), il pénètre dans le cordon de produit (2, 102) et est déplacé hors de celui-ci et suit de façon limitée le déplacement dans la direction de transport (F), **caractérisé en ce que** l'outil de mise en portions (18, 18a, 18b, 19, 19a, 19b, 119a, 119b) est tourné dans une trajectoire circulaire autour d'un premier axe (16) et dans une autre trajectoire circulaire autour d'un second axe (20, 21), le premier et le second axe (16, 20, 21) étant disposés à distance l'un de l'autre et les mouvements de rotation (A, B, C) autour du premier et du second axe (16, 20, 21) pouvant être commandés indépendamment les uns des autres.

10. Procédé suivant la revendication 9, **caractérisé en ce qu'**il est prévu une pluralité d'outils de mise en portions (18, 18a, 18b, 19, 19a, 19b, 119a, 119b), qui peuvent tourner chacun autour d'un axe propre (20, 21) et conjointement, à des distances angulaires mutuelles prédéfinies, autour d'un axe commun (16), le mouvement de rotation d'un outil de mise en portions autour de son axe (20) pouvant être commandé indépendamment du mouvement de rotation d'un autre outil de mise en portions autour de son axe (21).
